(19) Europäisches Patentamt
European Patent Office
Office européen des brevets

(11) Publication number: 0 156 576
B1

(12) # EUROPEAN PATENT SPECIFICATION

(45) Date of publication of patent specification: 09.12.87

(51) Int. Cl.$^4$: **C 09 C 1/02**, C 09 C 1/00, B 41 M 5/12, D 21 H 1/22, D 21 H 3/78

(21) Application number: 85301659.0

(22) Date of filing: 11.03.85

(54) **Methods of producing paper containing pigments.**

(30) Priority: 21.03.84 FI 841134

(43) Date of publication of application: 02.10.85 Bulletin 85/40

(45) Publication of the grant of the patent: 09.12.87 Bulletin 87/50

(84) Designated Contracting States: AT CH DE FR GB IT LI NL SE

(56) References cited:
FR-A- 847 308

CHEMICAL ABSTRACTS, vol. 71, no. 24, 1969, page 64, no. 113944v, Columbus, Ohio, US

CHEMICAL ABSTRACTS, vol. 76, no. 6, 1972, page 27, no. 25926p, Columbus, Ohio, US; V.I. SOLOMATOV et al.: "Effect of binary fillers on the properties of highly filled plastics"

(73) Proprietor: **KEMIRA OY**
**Malminkatu 30**
**SF-00100 Helsinki 10 (FI)**

(72) Inventor: **Helttula, Teppo Antti Kalevi**
**Pikipolku 2**
**SF-00670 Helsinki (FI)**
Inventor: **Jokinen, Olli Juhani**
**Gersterborgintie 2B7**
**SF-02410 Kirkkonummi (FI)**
Inventor: **Lehtinen, Kari Juhani**
**Bronrinne 3 as.27**
**SF-02400 Kirkkonummi (FI)**
Inventor: **Löfgren, Timo Valdemar**
**Hanikka 32 A**
**SF-02360 Espoo (FI)**

(74) Representative: **Webb, Frederick Ronald et al**
**G.F. Redfern & Co. Marlborough Lodge**
**14 Farncombe Road**
**Worthing West Sussex BN11 2BT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 156 576 B1

**Description**

The present invention relates to methods of producing paper of increased opacity by the use of filler pigments having a particle size in the range of 0.1 to 1 µm, preferably 0.2 to 0.6 µm.

In addition to inexpensive fillers, the use of which is intended to decrease the price of paper per weight unit, fillers which impart to the paper certain special properties are used as paper fillers. One such property is the opacity of the paper. A high opacity value is important, for example, when it is desired to save in raw material costs by reducing the thickness of the paper without compromising its opacity.

The opacity properties of paper are determined by its structure in the following way. Light penetrating into paper is not only reflected and deflected but also scattered. The opacity of paper is linked with the amount of scattering which occurs, and this amount can, for its part, be increased by increasing optical interfaces, i.e. by using suitable filler pigments. At any particular wavelength of light, the scattering is at its greatest when the radius of the particles is about one half the wavelength. The maximum scattering is higher the higher is the deflection coefficient of the particles.

The best known opacity-increasing filler pigment is $TiO_2$. Its use is, however, limited by its high price. Other filler pigments used for improving opacity include certain synthetic silicates such as sodium aluminium silicate. However, their price is also quite high.

An object of the present invention is to provide a method for making paper using a filler pigment which increases the opacity of the paper and is more economical than previously known ones, its particle size being in the range of 0.1 to 1 µm, preferably 0.2 to 0.6 µm, i.e. of the same order of magnitude as the wavelength of light, the filler pigment thus having a good light-scattering coefficient.

According to one aspect of the invention, there is provided a method of manufacturing paper having improved opacity by adding to the paper stock a filler pigment and thereafter removing water from the stock to form a paper sheet or a continuous paper web, characterised in that a filler pigment is used which has a particle size of about 0.1 to 1 µm, preferably about 0.2 to 0.6 µm, and comprises aggregates of microcrystals of $CaF_2$ and/or $MgF_2$ bound together by a gelled silica polymer.

In a preferred method according to the invention, an aqueous dispersion which has been obtained by mixing $H_2SiF_6$ in aqueous solution with a carbonate and/or hydroxide and/or oxide of Ca and/or Mg, is added to the stock as said filler pigment.

In accordance with another aspect of the invention, there is provided a method of manufacturing self-copying paper by applying a coating pigment to a paper sheet, characterised in that a coating pigment is used which has a particle size of about 0.1 to 1 µm, preferably about 0.2 to 0.6 µm, and comprises aggregates of microcrystals of $CaF_2$ or $MgF_2$ bound together by a gelled silica polymer.

It is known that synthetic calcium fluoride can be prepared from, for example, hydrofluosilicic acid by allowing it to react with calcium carbonate in accordance with the following equation:

$$H_2SiF_6 + 3CaCO_3 \rightarrow 3CaF_2 + SiO_2 + 3\ CO_2 + H_2O$$

The hydrofluosilicic acid used can advantageously be hydrofluosilicic acid formed in connection with the concentration of phosphoric acid used in the fertilizer industry. The calcium carbonate used can be any suitable pure calcium carbonate powder having a sufficiently small particle size. Instead of calcium carbonate, or in addition to it, it is possible to use calcium hydroxide, calcium oxide, or corresponding magnesium compounds, for example, dolomite powder.

The calcium carbonate is preferably used as a 5—20% aqueous slurry and the acid as a 5—30% aqueous solution. The product is in this case obtained as a relatively dilute aqueous suspension, the dry matter of which in accordance with the above equation consists of crystalline calcium fluoride and of silica, the state of which may vary depending on the conditions of the reaction mixture. The amount of silica in a stoichiometric reactor is about 20% of the total amount of dry matter in the reaction product. The mixture obtained is generally difficult to treat as such; among other things it is ony poorly filterable.

In Chemical Abstracts, Vol. 71, No. 24 (1969), page 64, No. 113 944v, an abstract of Japanese Patent Application No. 69 09817 is given which describes the production of a $CaF_2 \cdot SiO_2$ mixture by treating $H_2SiF_6$ in aqueous solution with an aqueous suspension of $Ca(OH)_2$. The product is used as a filler for rubber.

In general, no other useful application has been suggested for a mixture of calcium fluoride and silica of the type mentioned. Instead, several methods have been proposed for separating these compounds from each other. These methods are in general based on adjusting the conditions of the mixture to be such that the silica remains in the form of a sol, in which case it can be separated, for example, by filtering or decanting, from the calcium fluoride which is in solid form. For example German Patent Applications DE—OS—2 407 238 and DE—OS—2 533 128 disclose methods by which it is possible to produce synthetic calcium fluoride which is almost free from $SiO_2$. It has been proposed that the calcium fluoride thus obtained should be used as a raw material in the production of hydrogen fluoride and for metallurgical purposes. It has also been proposed that the separated $SiO_2$ should be used for the preparation of active silica, silica gel, or stabilized silica sol.

It has been observed surprisingly that a mixture of magnesium fluoride, or calcium fluoride and silica, prepared in the manner described above,

when used as a filler in paper significantly improves the opacity of the paper. The mixture can be used as such as an aqueous slurry obtained from the reaction, or as a filtered precipitate, in which case it can, when necessary, be washed to the desired $SiO_2$ content. It can also be used in the form of dried powder, which, however, is in most cases impractical because of the cost of drying.

The size of the magnesium fluoride and calcium fluoride crystals was determined from the half-widths of X-ray diffraction curves. It was observed that in the reaction referred to above, magnesium fluoride and calcium fluoride crystallize as very small crystals (typically 10—20 nm, depending on the conditions). As a result of the reaction, an aqueous suspension is thus obtained, which consists of microcrystalline magnesium fluoride, or calcium fluoride and of easily gelling silica. Such a mixture, which under certain conditions may even be glue-like, is in general very difficult to treat as such; for example it is usually very difficult to filter.

It was observed from scanning-electromicroscopic photographs of the mixture that magnesium fluoride and calcium fluoride are present in it in the form of aggregates with an even size distribution, the size of the aggregates being typically 0.2—0.6 µm, depending on the reaction conditions. The opacity-increasing action of the agent in paper can be understood against this background, since the size of the particles is in the same order as the wavelength of light (400—700 nm), in which case the scattering effect is at its greatest. The aggregates are formed from microcrystals of $MgF_2$ or $CaF_2$ bound together by a gelled silica-polymer. The shape of the aggregates is typically roundish.

The size of the aggregates which are formed is influenced by the amount of silica in the mixture and by its gelling and coagulation conditions. By a suitable adjustment of the pH (e.g. pH=2—3 or >7) it is easy to remove from the mixture the desired amount of silica as a sol, for example by filtering or decanting. At a pH of 5—6, silica can be caused to gel rapidly, and when so desired, silica can be coagulated or flocculated out from the mixture by using suitable coagulation or flocculation chemicals. Before using the aggregates as additives in paper it is advisable to ensure their good dispersion by effective mixing, which can be made more effective by means of suitable surfactants. The effectiveness of the mixing of the reaction mixture at the reaction stage also has an effect on the size of the aggregates formed. The conditions of the reaction mixture, such as the temperature, the strength of the reagents, and their method and order of addition affect the size of the forming microcrystals of $MgF_2$ and $CaF_2$, and thus, further, the size of the aggregates formed. In general, the theory of formation of the aggregates is not known, and the matter must be examined on the basis of experience.

The mixture of magnesium fluoride and/or calcium fluoride and silica, obtained in the reaction, is usually difficult to treat; for example, it may be difficult to filter. By adding to the reaction mixture suitable ions e.g. $Al^{3+}$ and $SO_4 4^{2-}$ ions, as suggested in German Patent Specification DE—OS—2 407 238) or a suitable surfactant, e.g., an organic amino compound, the mixture can be made easily to handle and to filter. In this case, it is, however, important to take into account that, especially when surfactants are used, it may happen that the size of the aggregates produced in the reaction mixture shifts to an unadvantageous range from the point of view of the opacity effect.

Owing to the $SiO_2$ contained in it, the reaction mixture is also suitable for the preparation of the copying surface of self-copying paper. A copying paper system is in general made up of two or more sheets in which the lower surface of each sheet (with the exception of the lowest sheet) is coated with microcapsules which contain a suitable colourless dye, such as crystal violet lactone or benzoleucomethylene blue, and the upper surface (with the exception of the topmost sheet) is coated with a layer which contains a suitable colour-forming pigment such as active kaolin or bentonite. During writing, the microcapsules on the lower surface of the sheet in the area of the writing trace are broken, the colourless liquid contained in them is released, absorbed in the pigment layer on the upper surface of the sheet below, and converted to its coloured form as a consequence of the surface reaction which occurs, whereupon the written text is in this way seen as a copy trace on the receiving sheet. It is known that silica gel also functions as such a colour-forming substance.

When a mixture of magnesium fluoride and/or calcium fluoride and silica is used for copy pigment purposes it is, of course, advantageous if the amount of $SiO_2$ in the mixture is as high as possible. In a stoichiometric reaction of hydrofluosilicic acid and calcium carbonate, $SiO_2$ is formed in an amount of about 25% of the amount of $CaF_2$. The whole of this amount of $SiO_2$ can be coagulated by known methods to form the product pigment.

The mixture of magnesium and/or calcium fluoride and silica used in the pigment of the invention has certain advantages over active kaolin and bentonite, which are commonly used as copy pigments. Compared with them it is particularly white, its raw material costs are low, and, when necessary, it can be used directly as the aqueous slurry obtained in the preparation reaction, without a cumbersome and expensive drying.

The invention is described below in greater detail with the aid of examples and with reference to the accompanying drawing, which depicts, as functions of the ash content, the effects of different fillers on the light-scattering coefficient ($m^2$/kg) of laboratory sheets (basic weight 45 $g/m^2$) prepared from newsprint stock. It is seen from the figure that the light-scattering coefficient of newsprint which contains calcium fluoride pigment

aggregates in accordance with the invention, bound together by means of gelled silica polymer, is considerably superior to that obtained by using sodium aluminum silicate ("Zeolex-"—Registered Trade Mark) and kaolin, which have been used for this purpose previously, but not as good as that obtained by using titanium dioxide, which is, however, much more expensive.

Example 1

120 g $CaCO_3$ (as a 20% aqueous slurry, particle size 50% less than 2 µm) was added to 48 g $H_2SiF_6$ (as a 20% aqueous solution) in the course of about 10 min, under continuous stirring, at a temperature of 60°C. Ten minutes after the end of the addition, the pH of the solution was 5.8 and 1 h after the addition it was 6.2, at which time it was considered that the reaction was complete. The mixture thus obtained was filtered in a Bühnel funnel under water suction and washed with an ample amount of water. The dry matter content of the precipitate obtained was 25.9%. This wet precipitate was used as a filler in the making of paper sheets. The $SiO_2$ content in the precipitate was determined as being 8.1%, the size of the $CaF_2$ primary crystals as being 14 nm, and the size of the secondary particles as being 0.1—0.3 µm.

The paper sheets were prepared as single sheets of size 165×165 mm, using a normal laboratory sheet-making apparatus and method. The stock used was newsprint stock. Before being added to the stock the pigment was dispersed into a suitable amount of water using an "Ultra-Turrax" (Registered Trade Mark) mixer. At the different testing points pigment was used at 10, 20 and 30% of the total amount of the stock. The ash content of the sheets was determined, and their ISO brightness, their opacity and their scattering and absorption coefficients were measured by means of Elrepho apparatus. The mean ash contents at the different testing points were 2.3%, 3.6% and 6.0%, and the scattering coefficients were respectively 54.1 $m^2$/kg, 55.9 $m^2$/kg and 59.8 $m^2$/kg.

Control 1

Using powdered "Zeolex (Registered Trade Mark) 323" (manufacturer Zeofinn Oy) as the pigment, sheets were made and tested as in Example 1. The mean ash contents at the different testing points were 2.7%, 4.8% and 7.0%, and the scattering coefficients wsre respectively 52.8 $m^2$/kg, 54.3 $m^2$/kg and 57.0 $m^2$/kg.

Control 2

Using "Zeolex (Registered Trade Mark 111" in the form of a 40% aqueous slurry as the pigment, sheets were made and tested as in Example 1. The mean ash contents at the different testing points were 3.3%, 5.5% and 8.4%, and the scattering coefficients were respectively 50.5 $m^2$/kg, 51.3 $m^2$/kg and 52.7 $m^2$/kg.

By comparing as a function of the ash content the scattering coefficients presented above it is observed that the values obtained by using $CaF_2$—$SiO_2$ mixture pigments were clearly better than those obtained by using commercial "Zeolex" (Registered Trade Mark) pigments.

Example 2

40 g $H_2SiF_6$ (as a 5% aqueous solution) was added to 83.3 g $CaCO_3$ (a 10% aqueous slurry, particle size 50% less than 2 µm) in the course of about 10 min at normal temperature, under continuous stirring. 10 min after the end of the addition, the pH of the mixture was 4.6, whereafter the pH was raised to 8 by means of a NaOH addition. The obtained mixture was filtered in a Bühnel funnel under water suction and washed with an ample amount of water. The dry matter content of the obtained precipitate was 43.2%. The $SiO_2$ content of the precipitate was determined as being 4.7%, the size of the $CaF_2$ primary crystals as being 15 nm, and the size of the secondary particles as being on average 0.4 µm. The size distribution of the latter was very even. This wet precipitate was used as a filler in the making of paper sheets.

Paper sheets were prepared by the procedure described in Example 1. The ash contents corresponding to the use of pigment at 10, 20 and 30% of the total amount of stock were 2.9%, 4.9% and 6.8%, and the light-scattering coefficients were respectively 58.3 $m^2$/kg, 59.7 $m^2$/kg and 63.0 $m^2$/kg.

Example 3

a) 3.0 kg $H_2SiF_6$ (as a 20% aqueous solution) was added to 6.25 kg $CaCO_3$ powder (as a 20% aqueous slurry, particle size 50% less than 2 µm) in the course of about 10 min at normal temperature, under continuous vigorous stirring. 10 min after the end of the addition, the pH of the mixture was 3.9 and a further 10 min later it was 4.2, whereafter the pH was raised to 8 by means of NaOH addition. Thereafter the mixture was treated by means of a centrifuge, the obtained precipitate was reslurried in water in order to wash the precipitate, and the centrifuge treatment was repeated. The dry matter content of the precipitate thus obtained was 55.4%. The $SiO_2$ content of the precipitate was determined as being 8.1%, the size of the $CaF_2$ primary crystals as being 15 nm, and the size of the secondary particles as being 0.3—0.6 µm. When dried, the precipitate had an ISO brightness of 91.8%.

b) the experiment presented above was repeated by using 6.6 kg Danish chalk as the source of calcium carbonate (as a 20% aqueous slurry, particle size 48% less than 2 µm, 97.9% $CaCO_3$). In this case the pH was 5.8 before the addition of NaOH. The dry matter content of the product was 49.4%. The $SiO_2$ content of the precipitate was 6.6%, the size of the $CaF_2$ primary crystals was 11 nm and the size of the secondary particles was 0.4—0.8 µm. When dried, the precipitate had an ISO brightness of 81.2%.

The wet pigment precipitates prepared under (a) and (b) were used as fillers in the making of

paper sheets. The sheets were prepared by the procedure described in Example 1. The stock used was newsprint stock having an ash content of 0.6%, and the light-scattering coefficient of a sheet (47.8 $g/m^2$) made from it without fillers was 52.9 $m^2/kg$ and its ISO brightness 56.8%.

When pigment 3a was used, the ash contents of the sheets corresponding to the use of pigment at 10, 20' and 30% of the total amount of the stock were 2.2%, 3.7% and 6.1% and respectively the light-scattering coefficients were 57.4 $m^2/kg$, 61.8 $m^2/kg$ and 65.1 $m^2/kg$, and the ISO brightness values were 57.9%, 59.3% and 60.8%. When pigment 3b was used, the ash contents were 2.5%, 4.5% and 6.7% and respectively the light-scattering coefficients were 57.4 $m^2/kg$, 61.6 $m^2/kg$ and 65.1 $m^2/kg$ and the ISO brightness values were 57.3%, 58.9% and 60.6%.

Control 3

By using "Zeolex (Registered Trade Mark) 111" as the pigment and the stock used in Example 3 as the stock, control sheets were made and tested as in Example 1. The mean ash contents at the different testing points were 3.1%, 5.7% and 8.7% and respectively the light-scattering coefficients were 54.4 $m^2/kg$, 55.6 $m^2/kg$ and 56.6 $m^2/kg$ and the ISO brightness values 57.2%, 58.6% and 60.2%.

Example 4

Laboratory sheets (∾50 $g/m^2$) were prepared by the procedure presented in Example 1, by using as the stock a mixture which contained 60% SC paper stock and 40% kaolin C. The ash content of the sheets made from this mixture was 20.7% and their light-scattering coefficient was 64.0 $m^2/kg$.

$CaF_2$ pigment prepared in accordance with Example 3b was added to the above mixture at 10, 20 and 30% of the total stock. The ash contents in the sheets prepared (∾50 $g/m^2$) were at the different testing points 22.3%, 23.4% and 24.8% and respectively the light-scattering coefficients were 66.4 $m^2/g$, 68.9 $m^2/g$ and 76.1 $m^2/g$. The content of $CaF_2$ pigment in the sheets was determined respectively at the different testing points as being 2.5%, 4.0% and 6.3% of the weight of the sheet.

For comparison, sheets (∾50 $g/m^2$) were made in which kaolin C was used in the addition instead of $CaF_2$ pigment. The ash contents at the different testing points were 23.6%, 27.2% and 30.9%, and the light-scattering coefficients were respectively 65.3 $m^2/kg$, 68.1 $m^2/kg$ and 69.9 $m^2/kg$.

On the basis of these results it is possible to determine that when in SC paper 4% (calculated from the weight of the paper) of the kaolin C filler contained in it is replaced by $CaF_2$ pigment, the opacity of the paper increases by 1%. Likewise it can be determined that by increasing the filler content of SC paper by 2.4% (calculated from the weight of the paper) while using $CaF_2$ pigment, the opacity of the paper can be increased by 1%.

Example 5

125 g $CaCO_3$ (as a 20% aqueous slurry) was added to 60 g $H_2SiF_6$ (as a 20% solution) in the course of about 10 min under continuous stirring. 10 min after the end of the addition, the pH of the mixture was 4.9 and 1 h after the addition it was 5.3. After filtering, the dry matter content of the precipitate was 25.4%. Thereafter the pH of the precipitate was raised by means of NaOH to 7, and 1 part carboxymethyl cellulose "Finnfix (Registered Trade Mark) 10" (manufacturer Metsäliiton Teollisuus Oy) and 10 parts latex "Dow (Registered Trade Mark) 675" (manufacturer Dow Chemicals) were added to it, whereby a paste that can be easily applied to paper surface was obtained.

A layer of the paste prepared above was applied to the surface of crude paper (basic weight 48 $g/m^2$); after the paper had dried the thickness of the layer was determined as being 5 $g/m^2$. The surface layer was very white and very even. A copy paper system was prepared by fixing on top of this self-made sheet various commercial sheets with a coating of copy colour capsules.

The writing trace was produced in the sheets by means of an electric typewriter, and the copy trace was assessed visually. In the self-coated sheet the copy trace was strong, and its colour tones were bright. In the commercial sheets the trace was somewhat weaker and the tones clearly dull. The difference in the strength of the copy trace may at least partly be attributable to the fact that in the commercial product the copy pigment layer was evidently thinner than in the self-coated sheet. Instead, in the quality of the colours the difference was evident, especially as regards the blue colour; in the self-coated sheet the colour was strongly blue, but in the commercial product it was obtained as purplish black. There was a definite difference also in the colour of the copying surface as such; the $CaF_2$—$SiO_2$ mixture pigment surface was pure white, but the surface of the commercial products was somewhat yellowish brown.

It will be clear to an expert in the art that pigment aggregates according to the present invention can also be prepared by mixing silica with calcium fluoride and/or magnesium fluoride to form an aqueous slurry, whereupon the gelled silica polymer will bind the primary crystals of calcium fluoride and/or magnesium fluoride together, forming larger pigment aggregates having a particle size of about 0.1—1 µm, preferably about 0.2—0.6 µm. The $SiO_2$ and $CaF_2$ and/or $MgF_2$ required for the forming of these pigment aggregates is, however, formed advantageously in situ by reacting $H_2SiF_6$ and a carbonate, hydroxide and/or oxide of Ca and/or Mg with each other in an aqueous solution in order to form the said gelled silica polymer and the said calcium fluoride and magnesium fluoride microcrystals, which thereafter form the said secondary particles, i.e. pigment aggregates having a size in the same order as the wavelength of light.

One procedure for preparing a filler pigment according to the invention is to add a suitable amount of $H_2SiF_6$ to a $CaCO_3$ slurry used as a filler or a coating pigment, whereby a mixture of $CaCO_3$ and the filler pigment according to the invention is obtained, and this mixture can be used as a filler pigment.

**Claims**

1. A method of manufacturing paper having improved opacity by adding to the paper stock a filler pigment and thereafter removing water from the stock to form a paper sheet or a continuous paper web, characterised in that a filler pigment is used which has a particle size of about 0.1 to 1 µm, preferably about 0.2 to 0.6 µm, and comprises aggregates of microcrystals of $CaF_2$ and/or $MgF_2$ bound together by a gelled silica polymer.

2. A method as claimed in Claim 1, characterised in that an aqueous dispersion which has been obtained by mixing $H_2SiF_6$ in aqueous solution with a carbonate and/or hydroxide and/or oxide of Ca and/or Mg, is added to the stock to form said filler pigment.

3. A method as claimed in Claim 1 or Claim 2, characterised in that the aggregates contain at most about 30%, preferably 2—20% by weight of $SiO_2$.

4. A method of manufacturing self-copying paper by applying a coating pigment to a paper sheet, characterised in that a coating pigment is used which has a particle size of about 0.1 to 1 µm, preferably about 0.2 to 0.6 µm, and comprises aggregates of microcrystals of $CaF_2$ or $MgF_2$ bound together by a gelled silica polymer.

**Patentansprüche**

1. Verfahren zur Herstellung von Papier mit geringerer Lichtdurchlässigkeit durch Beigabe von Füllpigmeten zum Faserbrei, dem anschließend zur Herstellung eines Papierbogens oder einer fortlaufenden Papierbahn das Wasser entzogen wird, dadurch gekennzeichnet, daß ein Füllpigment verwendet wird, das eine Korngröße von ungefähr 0,1 bis 1 µm, vorzugsweise etwa 0,2 bis 0,6 µm hat und Zuschlagstoffe von Mikrokristallen aus $CaF_2$ und/oder $MgF_2$ enthält, die durch ein geliertes Silika-Polymer gebunden sind.

2. Verfahren nach Anspruch 1, dadurch gekennzeichnet, daß eine wässrige Dispersion, welche durch Mischen von $H_2SiF_6$ in einer wässrigen Lösung mit einem Karbonat und/oder Hydroxid und/oder Oxid des Ca und/oder Mg erhalten wird, dem Faserbrei zur Bildung des Füllpigmentes zugefügt wird.

3. Verfahren nach den Ansprüchen 1 oder 2, dadurch gekennzeichnet, daß Zuschlagstoffe mit höchstens etwa 30%, vorzugsweise 2 bis 20 Gewichts-% $SiO_2$ verwendet werden.

4. Verfahren zur Herstellung von Selbstdurchschreibepapier durch Aufbringen eines Deckpigmentes auf ein Papierblatt, dadurch gekennzeichnet, daß ein Deckpigment verwendet wird, das eine Korngröße von etwa 0,1 bis 1 µm, vorzugsweise etwa 0,2 bis 0,6 µm hat und Zuschlagstoffe von Mikrokristallen aus $CaF_2$ oder $MgF_2$ enthält, die durch ein geliertes Silika-Polymer gebunden sind.

**Revendications**

1. Procédé de fabrication de papier ayant une opacité améliorée par addition d'un pigment de charge à la matière de base du papier, puis élimination d'eau de la matière de base pour former une feuille de papier ou une bande continue de papier, caractérisé en ce qu'on utilise un pigment de charge qui a une dimension de particule de 0,1 à 1 µm environ, et de préférence de 0,2 à 0,6 µm environ, et qui comprend des agrégats de microcristaux de $CaF_2$ et/ou $MgF_2$ liés ensemble par un polymère de silice en gel.

2. Procédé suivant la revendication 1, caractérisé en ce qu'une dispersion aqueuse, qui a été obtenue par mélange de $H_2SiF_6$ en solution aqueuse avec un carbonate et/ou hydroxyde et/ou oxyde de Ca et/ou Mg, est ajoutée à la matière de base pour former ledit pigment de charge.

3. Procédé suivant la revendication 1 ou la revendication 2, caractérisé en ce que les agrégats contiennent au plus environ 30% et de préférence 2 à 20% en poids de $SiO_2$.

4. Procédé de fabrication de papier pour autocopie, par application d'un pigment de revêtement à une feuille de papier, caractérisé en ce qu'on utilise un pigment de revêtement qui a une dimension de particule de 0,1 à 1 µm environ, et de préférence de 0,2 à 0,6 µm environ, et qui comprend des agrégats de microcristaux de $CaF_2$ ou $MgF_2$ liés ensemble par un polymère de silice en gel.

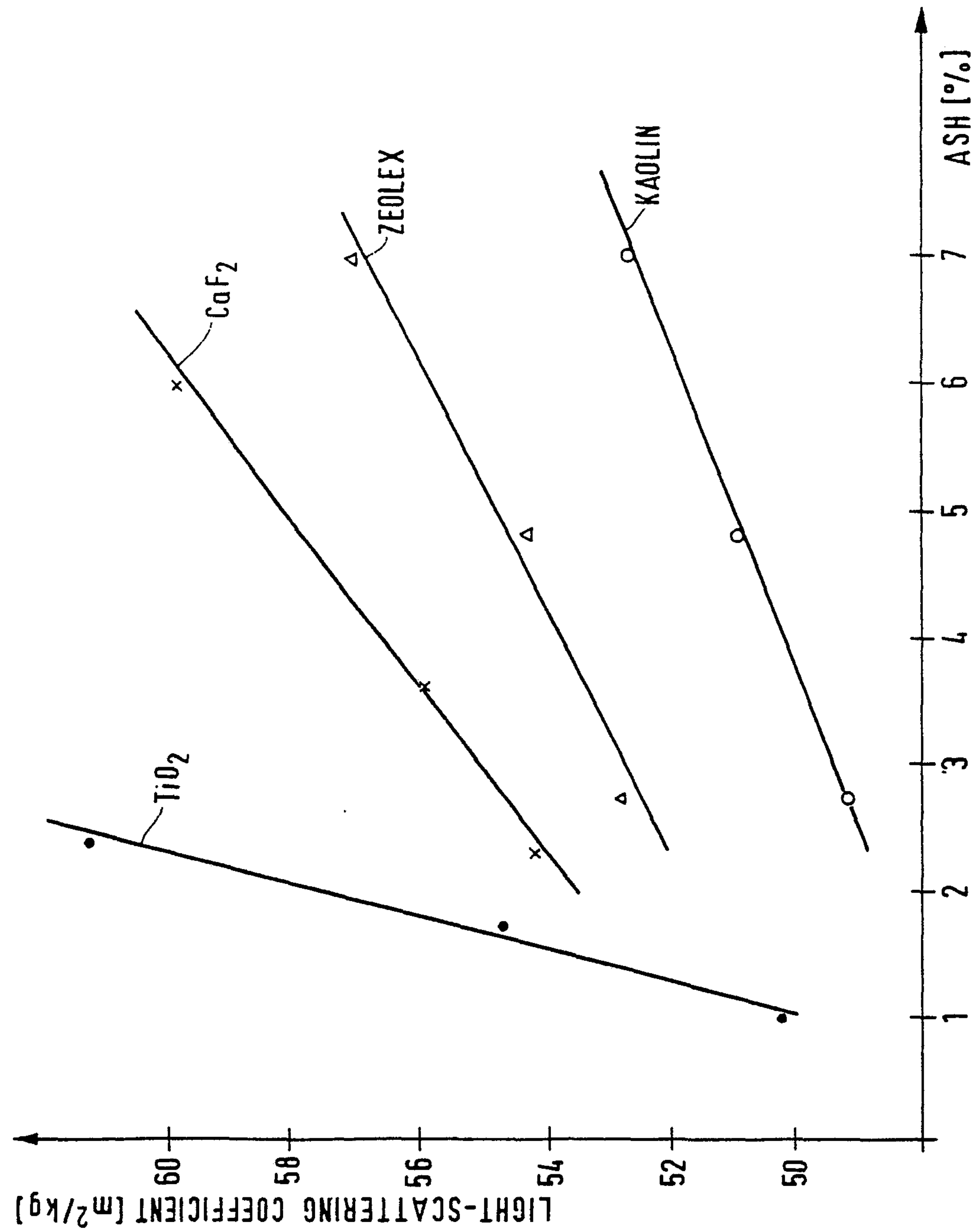
TiO2
CaF2
ZEOLEX
KAOLIN
ASH [%]
1
2
3
4
5
6
7
LIGHT-SCATTERING COEFFICIENT [m2/kg]
50
52
54
56
58
60